# EUROPEAN PATENT APPLICATION

(11) **EP 2 624 354 A1**
(43) Date of publication of application: **07.08.2013**
(21) Application number: 11828831.5
(22) Date of filing: 16.09.2011
(51) Int. Cl.: H01M 8/06, H01M 8/00, H01M 8/04, H01M 8/12

(54) **SECONDARY BATTERY TYPE FUEL CELL SYSTEM**

(30) Priority: 29.09.2010 JP 2010218581
(71) Applicant: Konica Minolta Holdings, Inc., Tokyo 100-7015 (JP)
(72) Inventor: UEYAMA Masayuki, Hino-Shi Tokyo 191-8511 (JP)
(74) Representative: HOFFMANN EITLE
(86) International application number: PCT/JP2011/071199
(87) International publication number: WO 2012/043271

(57) **Abstract**

This secondary battery type fuel cell system is provided with a hydrogen generator (1) that generates hydrogen by an oxidation reaction with water and is capable of regeneration by a reduction reaction with hydrogen and a SOFC (5) having an electricity generating function and a water electrolysis function. The system circulates a gas containing hydrogen and water vapor between the hydrogen generation part (1) and SOFC (5). Also provided is a water vapor partial pressure ratio setting section (heater (2), temperature sensor (3), and controller (7)) that sets the water vapor partial pressure ratio for the hydrogen generator (1).

## Description

### Technical Field

The present invention relates to a secondary battery type fuel cell system that is capable of performing not only power generation operation but also charging operation.

### Background Art

A fuel cell is designed such that electric power is extracted when water is generated by reaction between oxygen and hydrogen. Energy of electric power extracted from the fuel cell is theoretically highly efficient, and thus the fuel cell helps save energy, and furthermore, the fuel cell is also highly eco-friendly, exhausting only water during power generation. Thus, the fuel cell is regarded as a very promising solution to the global energy and environmental problems.

The fuel cell has a wide variety of applications including use as an EV power supply mounted in an EV (electric vehicle). When the fuel cell is used in such an application, since an EV is a movable object, it is desired to keep supplying fuel to the fuel cell over a long period of time to enable the EV to move a long distance.

In order to meet this demand, fuel cell systems disclosed in Patent Literatures 1. and 2 listed below are each provided with a plurality of hydrogen occlusion alloy tanks, and use the tanks sequentially.

### Citation List

### Patent Literature

Patent Literature 1: JP-A-2001-295996
Patent Literature 2: JP-A-2007-26683

### Summary of Invention

### Technical Problem

However, although both of the fuel cell systems disclosed in Patent Literatures 1 and 2 are designed to use a plurality of hydrogen occlusion alloy tanks one by one, neither is designed to function as a secondary battery, because the tanks are configured just to output hydrogen. Thus, these fuel cells are not capable of seamlessly performing power generation and charging.

An object of the present invention is to provide a secondary battery type fuel cell system capable of seamlessly performing power generation and charging.

### Solution to Problem

To achieve the above object, a secondary battery type fuel system according to the present invention includes a hydrogen generation section that generates hydrogen by an oxidation reaction with water and is capable of being regenerated by a reduction reaction with hydrogen, and a power generation/electrolysis section having a power generation function of generating power by using hydrogen supplied from the hydrogen generation section as a fuel and an electrolysis function of electrolyzing water to generate hydrogen to be supplied to the hydrogen generation section. Here, gas containing hydrogen and water vapor is made to circulate between the hydrogen generation section and the power generation/electrolysis section, and the secondary battery type fuel cell system further includes a water vapor partial pressure ratio setting section that sets water vapor partial pressure ratio of the hydrogen generation section. The power generation/electrolysis section may be provided with, for example, a fuel cell that switches between a power generation operation of generating power by using hydrogen supplied from the hydrogen generation section as a fuel and an electrolysis operation of electrolyzing water to generate hydrogen to be supplied to the hydrogen generation section. Alternatively, for example, the power generation/electrolysis section may separately include a fuel cell that generates power by using hydrogen supplied from the hydrogen generation section as a fuel and an electrolyzer that performs electrolysis of water for generating hydrogen to be supplied to the hydrogen generation section.

### Advantageous Effects of Invention

According to the present invention, it is possible to achieve a secondary battery type fuel cell system capable of seamlessly performing power generation and charging.

### Brief Description of Drawings

FIG. 1 is a schematic diagram showing an outline of the configuration of a fuel cell system according to a first embodiment of the present invention;
FIG. 2 is a schematic diagram showing an outline of the configuration of a solid oxide fuel cell (SOFC);
FIG. 3 is a diagram showing energy relationship between iron and iron oxide;
FIG. 4 is a diagram for illustrating water vapor partial pressure ratio in a hydrogen generator;
FIG. 5 is a flow chart showing an example of an operation of the fuel cell system according to the first embodiment of the present invention;
FIG. 6 is a schematic diagram showing an outline of the configuration of a fuel cell system according to a second embodiment of the present invention; and
FIG. 7 is abbreviated version of FIG. 6, illustrating an operation of the secondary battery type fuel cell system according to the second embodiment of the present invention.

### Description of Embodiments

Hereinafter, descriptions will be given of embodiments of the present invention with reference to the accompanying drawings. It should be noted that the present invention is not limited to the embodiments described below.

### < Configuration of Secondary Battery Type Fuel Cell System >

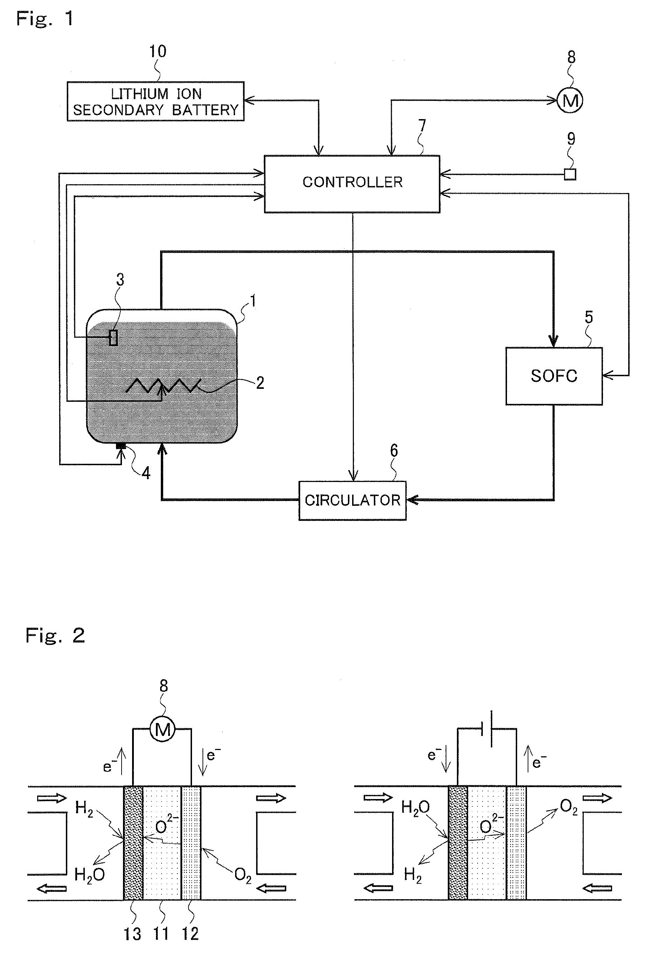

FIG. 1 is a diagram showing an overall configuration of a secondary battery type fuel cell system according to a first embodiment of the present invention. The secondary battery type fuel cell system according to the first embodiment of the present invention shown in FIG. 1 is provided with a hydrogen generator 1 containing a compressed mass of fine iron particles. Furthermore, the secondary battery type fuel cell system according to the first embodiment of the present invention shown in FIG. 1 is also provided with a heater 2 adapted to heat the hydrogen generator 1, a temperature sensor 3 adapted to detect a temperature of the hydrogen generator 1, and a residual amount sensor 4 adapted to detect amount of residual iron in the hydrogen generator 1. The residual amount sensor 4 may be, for example, a sensor that detects the amount of residual iron in the hydrogen generator 1 from a change in weight of the hydrogen generator 1, by making use of weight difference between iron and iron oxide. It can be said that the amount of residual iron in the hydrogen generator 1 indicates how much hydrogen is still able to be generated by the hydrogen generator 1.

The secondary battery type fuel cell system according to the first embodiment of the present invention shown in FIG. 1 is further provided with a solid oxide fuel cell (SOFC) 5, which is a type of fuel cell that uses hydrogen as a fuel of power generation during which water is also generated. The hydrogen generator 1 is connected to the SOFC 5 by a gas circulation path through which gas is allowed to circulate.

A circulator 6 is provided in the circulation path. The circulator 6 is a blower or a pump, and forcibly circulates gas existing in the circulation path.

A controller 7 is adapted to perform overall control of the system; based on temperature information outputted from the temperature sensor 3 and residual amount information outputted from the residual amount sensor 4, the controller 7 controls the heater 2 and the circulator 6 individually, sets reaction conditions for the hydrogen generator 1, supplies hydrogen to the SOFC 5 to make it perform the power generation operation, and drives a motor 8, which is a load.

Besides, in cases where regenerative power of the motor 8 is generated or power is supplied from an external power supply (not shown) to an external power supply input terminal 9, the controller 7 makes the SOFC 5 work as an electrolyzer, to regenerate the hydrogen generator 1 and charge the system.

A lithium ion secondary battery 10 connected to the controller 7 is adapted to supply power for driving the heater 2 and the like at start-up, and it is rechargeable with power generated by the SOFC 5 or supplied from the external power supply (not shown) connected to the external power supply input terminal 9.

### < Configuration and Operation of SOFC >

As shown in FIG. 2, the SOFC 5 has a three-layer structure where a solid electrolyte 11 that transmits O²⁻ is located between an oxidant electrode 12 and a fuel electrode 13. During the power generation operation in the SOFC 5, a reaction represented by the following formula (1) takes place at the fuel electrode 13:

H₂ + O²⁻ → H₂O + 2e⁻ (1)

Electrons generated by the reaction of the above formula (1) move through the motor 8, which is a load, and reach the oxidant electrode 12, where a reaction represented by the following formula (2) takes place:

1/2O₂ + 2e⁻ → O²⁻ (2)

Then, oxygen ions generated by the reaction of the above formula (2) move through the solid electrolyte 11, and reach the fuel electrode 13. The SOFC 5 generates electricity by repeating the above series of reactions. As is clear from the above formula (1), in the power generation operation, H₂ is consumed and H₂O is generated on the fuel cell 13 side.

On the other hand, when the SOFC 5 operates as an electrolyzer, reactions reverse to those of the above formulae (1) and (2) take place, and H₂O is consumed and H₂ is generated on the fuel electrode 13 side.

In this way, gases (hydrogen gas, water vapor gas) consumed and generated on the fuel electrode 13 side circulate between the fuel electrode 13 side of the SOFC 5 and the hydrogen generator 1.

### < Reaction in Hydrogen Generator >

Since the hydrogen generator 1 contains the compressed mass of fine iron particles, it is capable of generating hydrogen by an oxidation reaction represented by the following formula (3):

3Fe + 4H₂O → Fe₃O₄+4H₂ (3)

Along with progress of the oxidation reaction of iron represented by the above formula (3), conversion from iron to iron oxide progresses, and accordingly the amount of residual iron in the hydrogen generator 1 continues to be reduced, but it is possible to regenerate the hydrogen generator 1 and to charge the system by a reaction (reduction reaction) that is reverse to the reaction of the above formula (3).

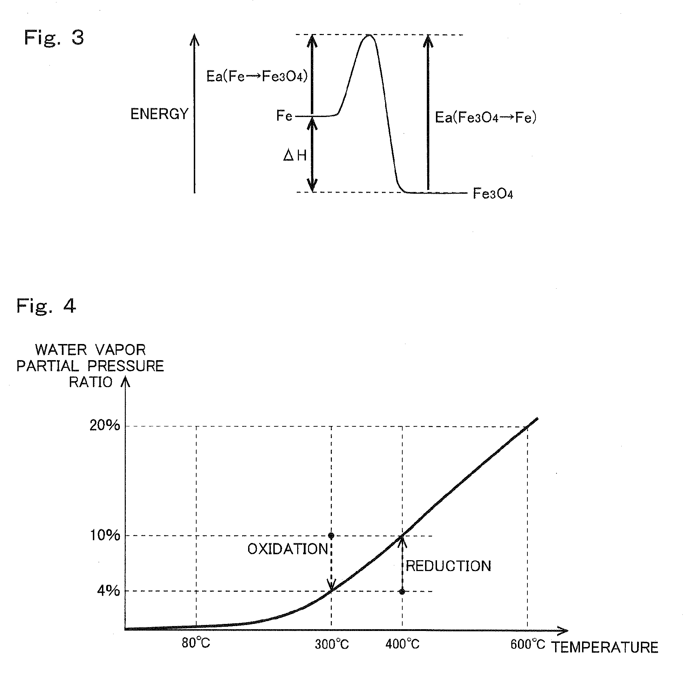

Here, energy relationship between iron (Fe) and iron oxide (Fe₃O₄) is shown in FIG. 3. Iron (Fe) has higher energy than iron oxide (Fe₃O₄), and thus the reaction (oxidation reaction) where iron (Fe) is converted into iron oxide (Fe₃O₄) is an exothermic reaction that emits heat, while the reaction (reduction reaction) where iron oxide (Fe₃O₄) is converted into iron (Fe) is an endothermic reaction.

Molecules need to have energy equal to or higher than activation energy Ea to allow a reaction to take place; as is clear from FIG. 3, activation energy Ea of the oxidation reaction (Fe →Fe₃O₄) is larger than activation energy Ea of the reverse, reduction reaction (Fe₃O₄→Fe). That is, the reduction reaction of iron oxide is less likely to take place than the oxidation reaction of iron.

Reaction velocity constant k, which indicates level of reactiveness, can be represented by the following formula (4) that uses gas constant R, absolute temperature T, frequency factor A, and activation energy Ea. Reaction velocity is given as a product of the reaction velocity constant k multiplied by concentration. Incidentally, by using a catalyst, it is possible to lower the activation energy Ea.

k = Aexp (-Ea/RT) (4)

As is clear from the above formula (4), an increase in temperature exponentially increases the reaction velocity k.

In the case of Fe₃O₄ without a catalyst, Ea is about 60 kJ, and, in an experiment conducted by the inventor, a reduction velocity of about 3 µmol/min was obtained at a temperature of 320°C in terms of amount by mole of H₂ per 1 g of Fe. 0.0238 mol of H₂ is necessary to reduce Fe₃O₄ to obtain 1g of Fe, and considering 10 hours as a practical length of time for reduction, it is desirable to obtain reduction velocity of about 40 µmol/min in terms of amount by mole of H₂ per 1 g of Fe. Ea/T with which the reduction velocity of 40 µmol/min can be obtained is 0.0797 kJ/K as calculated based on the reduction velocity of the case of Fe₃O₄ without a catalyst. Thus, it is desirable to satisfy the following formula (5). For example, if Al is used as the catalyst, Ea can be lowered to about 46 kJ, and if Ni-Cr is used, Ea can be lowered to about 21.5 kJ, and thus, it is possible to lower the required temperature.

T > 12.55Ea (5)

### < Water Vapor Partial Pressure Ratio in Hydrogen Generator >

FIG. 4 is a diagram for illustrating water vapor partial pressure ratio in the hydrogen generator 1. In a state where iron (Fe) and iron oxide (Fe₃O₄) coexist in the hydrogen generator 1, when gas mixture of hydrogen gas and water vapor gas also exists in the hydrogen generator 1, a stable equilibrium state is reached where the reaction velocity of oxidation reaction of iron is equal to that of the reduction reaction of iron oxide. A curve shown in FIG. 4 indicates this equilibrium state. Accordingly, the water vapor partial pressure ratio in the equilibrium state increases with temperature. For example, if the gas mixture where the water vapor partial pressure ratio is 10% is charged into the hydrogen generator 1 under a temperature of 300°C, since the water vapor partial pressure ratio in the equilibrium state is 4% (that is, lower than 10%), the oxidation reaction of iron which consumes water vapor is dominant, until the water vapor partial pressure ratio finally reaches 4%, and then the water vapor partial pressure ratio becomes stable. Reversely, if the gas mixture where the water vapor partial pressure ratio is 4% is charged into the hydrogen generator 1 under a temperature of 400°C, since the water vapor partial pressure ratio in the equilibrium state is 10% (that is, higher than 4%), the reduction reaction of iron oxide that generates water vapor is dominant until the water vapor partial pressure ratio becomes 10%, and then the water vapor partial pressure ratio becomes stable.

### < Operation of Secondary Battery Type Fuel Cell System >

Next, a description will be given of operation of the secondary battery type fuel cell system according to the first embodiment of the present invention shown in FIG. 1, dealing with, as an example, a case where the secondary battery type fuel cell system according to the first embodiment of the present invention shown in FIG. 1 is mounted in an EV to be used as a power supply for the EV.

To make the hydrogen generator 1 generate hydrogen for generating power for driving the EV, the controller 7 heats the hydrogen generator 1 (to 320°C here) by using the heater 2, and activates the circulator 6 to circulate gas. The SOFC 5 generates power, consuming hydrogen gas existing in the circulation path and generating water vapor gas. Here, if the partial pressure ratio of the water vapor generated by the SOFC 5 is higher than 4.5%, which is the equilibrium water vapor partial pressure ratio at the temperature of 320°C, the oxidation reaction of iron becomes dominant; in the hydrogen generator 1, water vapor gas is replace by hydrogen gas to recover a state where the water vapor partial pressure ratio is 4.5% and the partial pressure ratio of hydrogen is 95.5%. Power continues to be generated in a cycle where this hydrogen gas is consumed again by the SOFC 5 to generate water vapor gas.

On the other hand, to regenerate the hydrogen generator 1 to charge the system, the controller 7 heats the hydrogen generator 1 (to 320°C here) by using the heater 2, and activates the circulator 6 to make gas circulate. Besides, the controller 7 makes the SOFC 5 operate as an electrolyzer. In this case, the SOFC 5 consumes water vapor gas existing in the circulation path to generate hydrogen gas. Here, if the partial pressure ratio of the water vapor generated by the hydrogen generator 1 is lower than 4.5%, which is the equilibrium water vapor partial pressure ratio at the temperature of 320°C, the reduction reaction of iron oxide becomes dominant; in the hydrogen generator 1, hydrogen gas is replace by water vapor gas to recover the state where the water vapor partial pressure ratio is 4.5% and the partial pressure ratio of hydrogen is 95.5%. The hydrogen generator 1 is regenerated and the system continues to be charged with power in a cycle where this water vapor gas is consumed again by the SOFC 5 to generate hydrogen gas.

As described above, in the hydrogen generator 1, simply by setting the temperature to 320°C at which a reversible oxidation/reduction reaction is possible, a reaction naturally takes place toward a water vapor partial pressure ratio of 4.5% which is the equilibrium water vapor partial pressure ratio at 320°C. This allows the system to repeat power generating and charging operations in short terms without any additional switching operation, and further, without changing the temperature setting.

In the present embodiment, the single SOFC 5 not only generates power but also electrolyzes water, but instead, the hydrogen generator 1 may be connected in parallel to each of a fuel cell (for example, an SOFC dedicated for power generation) and water electrolyzer (for example, an SOFC dedicated for electrolyzing water) by the gas circulation path. Besides, a base material (main component) of the hydrogen generator 1 is not limited to iron, but any material may be used as long as it can be oxidized by water and reduced by hydrogen (for example, a magnesium alloy and the like).

### < Other Operation of Secondary Battery Type Fuel Cell System >

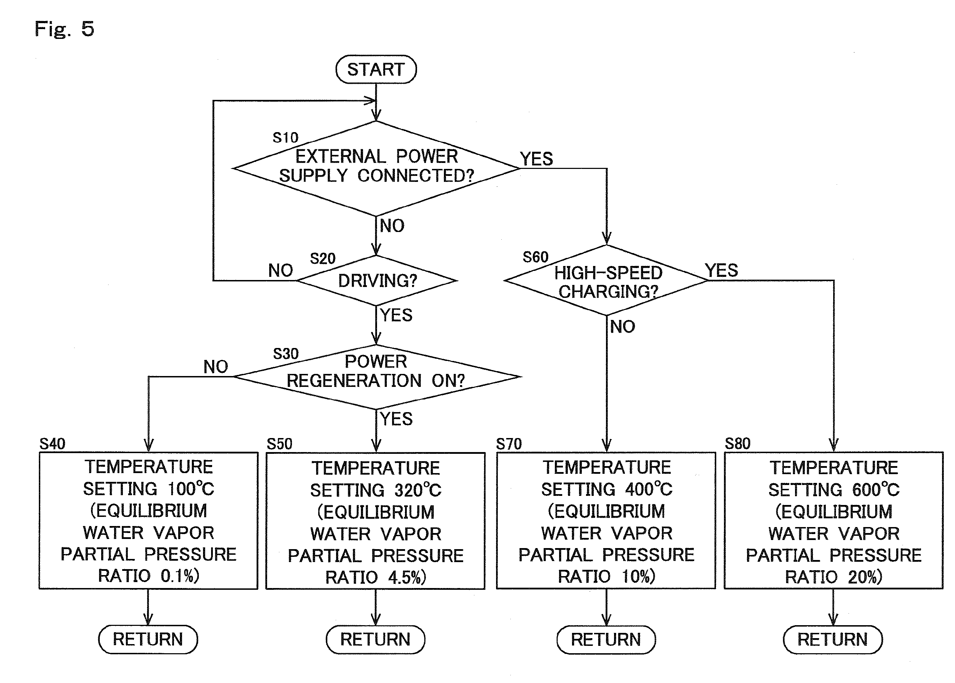

Next, with reference to a flow chart shown in FIG. 5, a description will be given of other operation of the secondary battery type fuel cell system according to the first embodiment of the present invention shown in FIG. 1, dealing with, as an example, a case where the secondary battery type fuel cell system according to the first embodiment of the present invention shown in FIG. 1 is mounted in an EV to be used as a power supply for the EV.

In a power generation operation mode, desirably, there is an ample amount of hydrogen gas to be consumed for power generation, and in a charging operation mode, it is desirable that there is an ample amount of water vapor gas to be consumed for charging. In the power generation operation mode, if the water vapor partial pressure ratio is set to be small, generation of hydrogen gas is promoted, and it is possible to generate larger current. In the charging operation mode, if the water vapor partial pressure ratio is set to be large, generation of water vapor gas is promoted, and it is possible to charge larger current. Thus, in the flow chart shown in FIG. 5, a control operation is performed such that there exists a larger amount of gas to be consumed in each of the modes.

When the secondary battery type fuel cell system according to the first embodiment of the present invention shown in FIG. 1 is activated, the operation shown in the flow chart of FIG. 5 is started to be performed. First, the controller 7 determines whether or not the external power supply is connected to the external power source input terminal 9 (step S10).

If the external power supply is connected to the external power supply input terminal 9 (YES in step S10), the charging operation mode is selected, and the controller 7 proceeds to step S60 which will be described later.

In contrast, if the external power supply is not connected to the external power supply input terminal 9 (NO in step S10), the controller 7 receives information of an operation state of the EV from a control section of a main body of the EV, and determines based on the information whether or not the EV is in a driving state (step S20). It is desirable that an idling state occurring when, for example, the EV is waiting for a traffic light to change be considered as part of the driving state, but a temporary stop continuing over a predetermined time may be excluded from the driving state.

If the EV is not driving (NO in step S20), the controller 7 returns to step S10, while the power generating mode is selected if the EV is driving (YES in step S20), and the controller 7proceeds to step S30.

In step S30, the controller 7 determines whether or not to select a power regenerative setting. For example, if the EV is driving at a predetermined speed or faster, the power regenerative setting is selected, and if the EV is driving at a speed lower than the predetermined speed, a setting is selected such that power regeneration is not performed. If the selected setting is not the power regenerative setting (NO in step S30), the controller 7 sets temperature of the hydrogen generator 1 to 100°C (step S40), and thereafter, the controller 7 returns to step S10. In this case, the equilibrium water vapor partial pressure ratio is 0.1%. In contrast, if the selected setting is the power regenerative setting (YES in step S30), the controller 7 sets the temperature of the hydrogen generator 1 to 320°C (step S50), and thereafter, the controller 7 returns to step S10. In this case, the equilibrium water vapor partial pressure ratio is 4.5%.

The temperature setting in the power generation operation mode is used to control the heater 2; the heater 2 is kept on until a set temperature is reached and then turned off when the set temperature is reached. This is because, in the power generation operation mode where exothermic reaction of oxidizing iron to generate hydrogen takes place, continuous heating by the heater 2 is not necessary. Furthermore, even if the temperature sensor 3 detects a temperature that is higher than the set temperature, there is no need of cooling down, because a high temperature promotes the reaction.

On the other hand, in the above-described charging operation mode, the controller 7 determines whether or not to select a setting for performing high-speed charging (a high-speed charging mode) (step S60). If a setting where high-speed charging is not performed (a normal charging mode) is selected (NO in step S60), the controller 7 sets the temperature of the hydrogen generator 1 to 400°C (step S70), and thereafter, the controller 7 returns to step S10. In this case, the equilibrium water vapor partial pressure ratio is 10%. In contrast, if the setting for performing high-speed charging is selected (YES in step S60), the controller 7 sets the temperature of the hydrogen generator 1 to 600°C (step S80), and thereafter, the controller 7 returns to step S10. In this case, the equilibrium water vapor partial pressure ratio is 20%.

The temperature setting in the charging operation mode as well is used to control the heater 2; driving of the heater 2 is controlled so as to maintain a set temperature. In the charging operation mode, where endothermic reaction of reducing iron dioxide to generate water vapor takes place, continuous heating by the heater 2 is necessary. Thus, driving of the heater 2 is controlled such that a temperature detected by the temperature sensor 3 is equal to the set temperature.

### < Other Configuration of Second Battery Type Fuel Cell System >

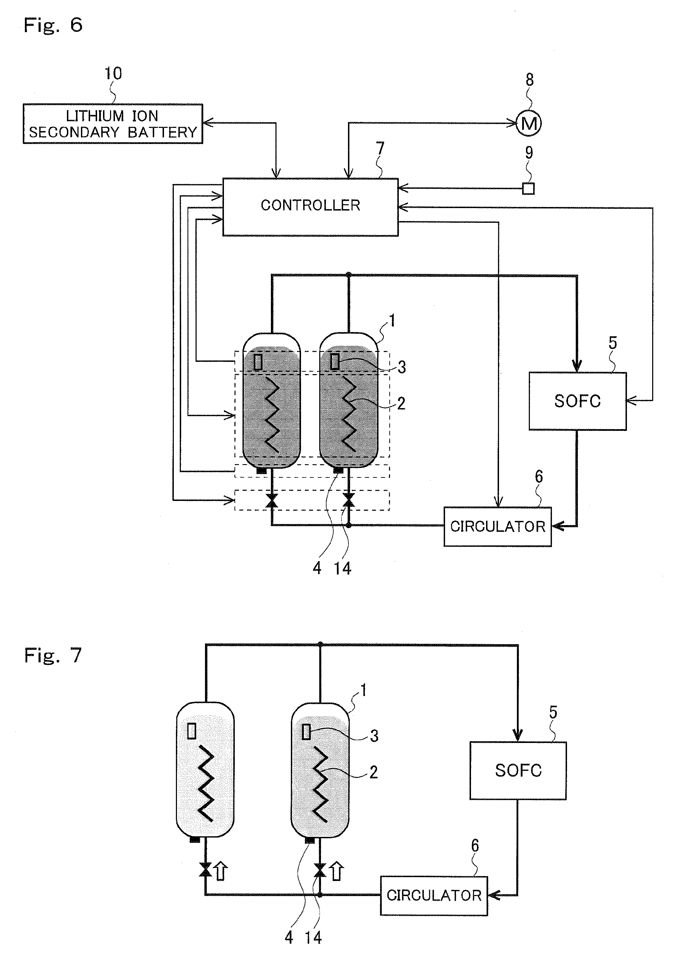

FIG.6 is a diagram showing an overall configuration of a secondary battery type fuel cell system according to a second embodiment of the present invention. Parts and portions in FIG. 6 that have counterparts in FIG. 1 are denoted by the same reference signs as their counterparts in FIG. 1. The secondary battery type fuel cell system according to the second embodiment of the present invention shown in FIG. 6 is provided with two hydrogen generators 1 that each contain a compressed mass of fine iron particles. Furthermore, the secondary battery type fuel cell system according to the second embodiment of the present invention shown in FIG. 6 is provided with a plurality of heaters 2 that each heat a corresponding one of the hydrogen generators 1, a plurality of temperature sensors 3 that each detect temperature of a corresponding one of the hydrogen generators 1, and a plurality of residual amount sensors 4 that each detect amount of residual iron in a corresponding one of the hydrogen generators 1. The residual amount sensors 4 may be, for example, a sensor that detects amount of residual iron in the hydrogen generator 1 from a change in weight of the hydrogen generator 1, by making use of weight difference between iron and iron oxide.

The secondary battery type fuel cell system according to the second embodiment of the present invention shown in FIG. 6 is provided with a solid oxide fuel cell (SOFC) 5 which is a fuel cell that generates power and water by using hydrogen as a fuel. The hydrogen generators 1 are each parallelly connected to the SOFC 5 by a gas circulation path through which gas is allowed to circulate.

A circulator 6 is provided in the circulation path. The circulator 6 is a blower or a pump, and forcibly circulates gas existing in the circulation path. In the circulation path, there are also provided flow rate controllers 14 that each control gas flow rate in a corresponding one of the hydrogen generators 1. Note that the flow rate controllers 14, which are each simply illustrated only on one side of the corresponding one of the hydrogen generators 1 in the figure, each control the flow rate of gas flowing from the circulation path to pass through the corresponding one of the hydrogen generator 1.

A controller 7 is adapted to perform overall control of the system; in the present embodiment, based on temperature information outputted from the temperature sensors 3 and residual amount information outputted from the residual amount sensors 4, the controller 7 individually controls the heaters 2, the circulator 6, and the flow rate controllers 14, sets reaction conditions for the hydrogen generators 1, supplies hydrogen to the SOFC 5 to make it perform the power generation operation, and drives a motor 8, which is a load.

Besides, in cases where regenerative power of the motor 8 is generated or power is supplied from an external power supply (not shown) to an external power supply input terminal 9, the controller 7 makes the SOFC 5 work as an electrolyzer, to regenerate the hydrogen generators 1 and charge the system.

A lithium ion secondary battery 10 connected to the controller 7 is adapted to supply power for driving the heaters 2 and the like at start-up, and it is rechargeable with power generated by the SOFC 5 or supplied from the external power supply (not shown) connected to the external power supply input terminal 9.

FIG. 7 is an abbreviated version of FIG. 6, illustrating a power regeneration-corresponding operation performed by the secondary battery type fuel cell system according to the second embodiment of the present invention. In FIG. 7, a right-side one of the hydrogen generators 1 (hereinafter, the right hydrogen generator 1) has a high temperature (for example, 400°C), while a left-side one of the hydrogen generators1 (hereinafter, the left hydrogen generator 1) has a low temperature (for example 100°C).

If amount of gas flowing into the right hydrogen generator 1 and amount of gas flowing into the left hydrogen generator 1 are equal, a mean value of equilibrium water vapor partial pressure ratio corresponding to the set temperature of the right hydrogen generator 1 and equilibrium water vapor partial pressure ratio corresponding to the set temperature of the left hydrogen generator 1 is equilibrium water vapor partial pressure ratio set in the secondary battery type fuel cell system according to the second embodiment of the present invention shown in FIGS. 6 and 7.

In this state, if water vapor partial pressure ratio in the circulation path is equal to the mean value of the equilibrium water vapor partial pressure ratios based on the temperatures of the two hydrogen generators 1, reduction reaction becomes dominant in the right hydrogen generator 1 which is set to have a high temperature, while oxidation reaction becomes dominant in the left hydrogen generator 1 which is set to have a low temperature. Thus, the power generating and charging operations can be performed simultaneously. On the other hand, in a case where only the power generation operation is desired to be performed, gas circulation to the right hydrogen generator 1 is stopped by using the flow rate controller 14 to use only the left hydrogen generator 1. Reversely, in a case where only the charging operation is desired to be performed, gas circulation to the left hydrogen generator 1 is stopped by using the flow rate controller 14 to use only the right hydrogen generator 1. By setting the plurality of hydrogen generators 1 to have different temperatures in this way, it is possible to change the set value of the water vapor partial pressure ratio depending on which of the hydrogen generators 1 to use. Besides, it is also possible to interchange the settings on the high and low temperatures when amount of residual iron dioxide in the right hydrogen generator 1 and amount of residual iron in the left hydrogen generator 1 are each smaller than a predetermined amount. Thereby, it is possible to change which of the hydrogen generators 1 to be used for the power generation operation and which of the hydrogen generators 1 to be used for the charging operation.

Furthermore, by the controller 7 using the flow rate controllers 14 to control the ratio between amount of gas flowing into the right hydrogen generator 1 and amount of gas flowing into the left hydrogen generator 1, it is possible to smoothly change the setting of equilibrium water-vapor partial pressure ratio without changing the temperature setting of the right hydrogen generator 1 and the temperature setting of the left hydrogen generator 1.

### List of Reference Symbols

- 1: hydrogen generator
- 2: heater
- 3: temperature sensor
- 4: residual amount sensor
- 5: solid oxide fuel cell (SOFC)
- 6: circulator
- 7: controller
- 8: motor
- 9: external power supply input terminal
- 10: lithium ion secondary battery
- 11: solid electrolyte
- 12: oxidant electrode
- 13: fuel electrode
- 14: flow rate controller

## Claims

1. A secondary battery type fuel cell system, comprising:
a hydrogen generation section that generates hydrogen by an oxidation reaction with water and is capable of being regenerated by a reduction reaction with hydrogen; and
a power generation/electrolysis section having
a power generation function of generating power by using hydrogen supplied from the hydrogen generation section as a fuel, and
an electrolysis function of electrolyzing water to generate hydrogen to be supplied to the hydrogen generation section,
wherein
gas containing hydrogen and water vapor is made to circulate between the hydrogen generation section and the power generation/electrolysis section, and
the secondary battery type fuel cell system further comprises a water vapor partial pressure ratio setting section that sets water vapor partial pressure ratio of the hydrogen generation section.

2. The secondary battery type fuel cell system according to claim 1,
wherein
the water vapor partial pressure ratio setting section is a temperature setting section that sets temperature of the hydrogen generation section, and
the secondary battery type fuel cell system further comprises a heater that is controlled based on a temperature set by the temperature setting section.

3. The secondary battery type fuel cell system according to claim 2,
wherein
activation energy Ea for activating the reduction reaction in the hydrogen generation section and the temperature T set by the temperature setting section fulfill relationship described by the following formula: T > 12.55Ea.

4. The secondary battery type fuel cell system according to claim 1,
wherein
the hydrogen generation section is composed of a plurality of hydrogen generators, and
the water vapor partial pressure ratio setting section has a temperature setting section that is capable of individually setting temperature of each of the plurality of hydrogen generators.

5. The secondary battery type fuel cell system according to claim 4,
wherein
the water vapor partial pressure ratio setting section has a flow rate control section that is capable of individually controlling a flow rate of gas circulating each of the plurality of hydrogen generators.

6. The secondary battery type fuel cell system according to any one of claims 1 to 5,
wherein
the secondary battery type fuel cell system has a normal charging mode and a high-speed charging mode, and
the water vapor partial pressure ratio set by the water vapor partial pressure ratio setting section is larger in the high-speed charging mode than in the normal charging mode.
